**Europäisches Patentamt**

**European Patent Office**

**Office européen des brevets**

(19)

(11) Veröffentlichungsnummer: **0 039 427**
**B1**

(12) **·EUROPÄISCHE PATENTSCHRIFT**

(45) Veröffentlichungstag der Patentschrift:
**19.02.86**

(51) Int. Cl.⁴: **A 01 D 41/12**

(21) Anmeldenummer: **81102788.7**

(22) Anmeldetag: **11.04.81**

(54) Fördervorrichtung zum Befüllen mit Erntegut des Sammelbehälters eines Mähdreschers.

(30) Priorität: **02.05.80 DE 3016840**

(43) Veröffentlichungstag der Anmeldung:
**11.11.81 Patentblatt 81/45**

(45) Bekanntmachung des Hinweises auf die Patenterteilung:
**19.02.86 Patentblatt 86/8**

(84) Benannte Vertragsstaaten:
**AT DE FR GB IT**

(56) Entgegenhaltungen:
**BE - A - 757 359**
**DE - A - 2 024 708**
**DE - A - 2 202 454**
**DE - U - 1 842 549**
**FR - A - 1 222 190**
**US - A - 2 783 906**

(73) Patentinhaber: **DEERE & COMPANY, 1 John Deere Road, Moline Illinois 61265 (US)**

(72) Erfinder: **Lenski, Ralph, Dunantstrasse 10, D-6660 Zweibrücken (DE)**
Erfinder: **Peiler, Rolf W., Heiligentalstrasse 11, D-6660 Zweibrücken (DE)**
Erfinder: **Pauli, Klaus H., Kantstrasse 12, D-6650 Homburg (DE)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine Fördervorrichtung zum Befüllen des Sammelbehälters eines Mähdreschers mit Erntegut, welches von einem tiefer liegenden Niveau aus nach oben in den Sammelbehälter gefördert wird, mit einem ersten eine Förderschnecke aufweisenden Förderrohr und einem zweiten an das erste Förderrohr über ein geschlossenes Verbindungsgehäuse angeschlossenen, ebenfalls eine Förderschnecke aufweisenden, ansteigenden Förderrohr, wobei die beiden Förderschnecken endseitig über Antriebselemente miteinander antriebsverbunden sind und ihre beiden geometrischen Mittelachsen einen Winkel kleiner als 90° einschliessen.

Es ist bereits eine Fördervorrichtung zum Entleeren eines Sammelbehälters für Mähdrescher bekannt (US-PS 2 783 906), die aus zwei miteinander verbundenen Entleerungsrohren gebildet ist, in der Förderschnecken endseitig über Kegelräder miteinander verbunden sind. Die durch die beiden Förderschnecken verlaufenden geometrischen Mittellinien schliessen einen Winkel ein, der wesentlich grösser als 90° ist, da die Fördervorrichtung lediglich zum Entleeren des Sammelbehälters eingesetzt werden muss und über die Fördervorrichtung ein seitlich neben dem Mähdrescher vorzusehendes Ladefahrzeug belädt. Soll jedoch mit einer derartigen Fördervorrichtung ein oberhalb der horizontal verlaufenden Förderschnecke vorgesehener Sammelbehälter befüllt werden, so ist eine wesentlich stärkere Umlenkung der zweiten Förderschnecke gegenüber der ersten Förderschnecke nötig. Aus diesem Grunde wird normalerweise an die erste Förderschnecke ein vertikal fördernder Elevator angeschlossen. Eine derartige Vorrichtung ist jedoch wesentlich aufwendiger und teurer.

Ferner ist es bekannt (DE-OS 2 024 708), bei einer Ausladevorrichtung für Mähdrescher die Austragförderschnecke derart schräg verlaufend im Sammelbehälter anzuordnen, dass sie mit der seitlich versetzt dazu angeordneten, horizontal verlaufenden Förderschnecke einen spitzen Winkel einschliesst. Zwischen der Übergangsstelle und der schräg verlaufenden Förderschnecke muss ein Sumpf vorgesehen werden, damit das Erntegut von der horizontal verlaufenden Schnecke zur schräg verlaufenden Schnecke gelangen kann. Ein gemeinsamer endseitiger Antrieb für beide Förderschnecken ist bei einer derartigen Anordnung sehr aufwendig.

Ausserdem ist eine Entleerungsvorrichtung für den Korntank eines Mähdreschers bekannt (DE-A-2 202 454), die aus einem ersten eine Förderschnecke aufweisenden Förderrohr und einem zweiten an das erste Förderrohr über ein geschlossenes Verbindungsgehäuse unter einem Winkel grösser als 90° angeschlossenen, ebenfalls eine Förderschnecke aufweisenden, ansteigenden Förderrohr besteht. Das Wellenende der ersten Förderschnecke ist über ein Kettengetriebe, ein Winkelgetriebe, eine vertikal verlaufende Welle, über ein weiteres Winkelgetriebe an die Welle der ansteigenden Förderschnecke angeschlossen. Die jeweiligen Kegelradpaare liegen ausserhalb des Förderstromes des Erntegutes. Das horizontal verlaufende Fördergehäuse ist über ein vertikal verlaufendes Fördergehäuse mit dem ansteigenden Förderrohr für die zweite Entleerungsschnecke verbunden. Eine derartige Vorrichtung ist wegen der vielen Bauteile und der Antriebsmittel aufwendig und teuer.

Ferner ist eine Vorrichtung der eingangs aufgeführten Art zum Befüllen des Sammelbehälters eines Mähdreschers mit Erntegut bekannt (BE-A-757 359), die aus einer horizontal verlaufenden in einem Förderrohr angeordneten Förderschnecke sowie zwei sich daran anschliessenden Förderschnecken besteht, die jeweils in einem Fördergehäuse angeordnet sind. Die beiden ansteigenden Förderschnecken sind über Kegelräder mit dem Kegelrad der horizontal verlaufenden Förderschnecke antriebsverbunden. Die beiden horizontal verlaufenden Förderschnecken verlaufen in einer geneigt verlaufenden Ebene, wobei die horizontal verlaufende Welle der ersten Förderschnecke mit der ansteigenden Welle der zweiten Förderschnecke einen Winkel einschliesst, der kleiner als 90° ist. Die durch die beiden Wellen verlaufende Ebene bildet mit dem Boden des Sammelbehälters bzw. der Standfläche des Mähdreschers einen spitzen Winkel. Das Erntegut wird also über die horizontal verlaufende Schnecke den beiden geneigt verlaufenden Schnecken aufgegeben. Die hierzu vorgesehenen Antriebsmittel der drei Förderschnecken werden von dem zu fördernden Erntegut umströmt, so dass das Erntegut, insbesondere im Bereich der Umlenkungsstelle, einen relativ grossen Reibungswiderstand zu überwinden hat.

Demgegenüber liegt der Erfindung die Aufgabe zugrunde, die Fördervorrichtung mittels Förderschnecken zum Befüllen des Sammelbehälters eines Mähdreschers derart auszubilden und anzuordnen, dass auch unmittelbar oberhalb einer horizontal verlaufenden Förderschnecke ein Sammelbehälter mit einem Minimum an Bauaufwand befüllt werden kann.

Diese Aufgabe ist dadurch gelöst worden, dass die beiden geometrischen Mittelachsen der Förderschnecken auf einer vertikalen Ebene angeordnet sind und dass die beiden Förderrohre über Stirnwände derart geschlossen sind, dass die Stirnwände zur Aufnahme von Wellen der Förderschnecken dienen und mit der übrigen Gehäusewand der Förderrohre einen Förderkanal bilden, wobei die miteinander verbundenen Antriebselemente ausserhalb des Förderkanals liegen. Bei einer derart starken Umlenkung des Erntegutes zwischen zwei miteinander verbundenen Förderschnecken, die in einer vertikal verlaufenden Ebene angeordnet sind, kann auch direkt oberhalb der ersten horizontal verlaufenden Förderschnecke ein Sammelbehälter über die zweite an die erste Förderschnecke angeschlossene Förderschnecke befüllt werden, ohne dass hierzu zwischen den beiden Förderschnecken ein Zwischenförderer vorgesehen werden muss. Da die Antriebselemente nicht innerhalb des Förderstromes des Erntegutes liegen, lässt sich insbesondere im Umlenkbereich das Erntegut ohne weiteres weiterleiten, ohne dass hierzu ein übermässig grosser Kraftaufwand erforderlich ist. Hierzu ist es vorteilhaft, dass die beiden Förderrohre derart über den Förderkanal miteinander verbunden sind, dass der Förderkanal oberhalb des Schnittpunktes der Wellen der beiden endseitig verbundenen Förderschnecken bzw. der die Förderrohre verschliessenden Stirnseiten und seine Mittelachse in etwa rechtwinklig zur Winkelhalbierenden der sich schneidenden Wellen verläuft.

In weiterer Ausgestaltung der Erfindung ist es vorteilhaft, dass der Winkel eine Grösse von ca. 75° aufweist. Vorteilhaft ist es ausserdem, dass die beiden Stirnwände zur Aufnahme der Lager mit ihren Kanten aneinanderstossen, die Förderrohre nach aussen hin abdichten und einen Winkel grösser als 90° einschliessen. Durch die beiden aneinander angrenzenden Stirnwände, die zur Aufnahme der Wellen dienen, erhält man einmal auf einfache Weise einen Förderkanal zur Umlenkung des Erntegutes zwischen der horizontal verlaufenden Förderschnecke und der ansteigenden Förderschnecke sowie ein abgeschlossenes Gehäuse zur Aufnahme der die beiden Wellen verbindenden Antriebselemente.

Um insbesondere im Umlenkbereich die Förderwirkung des Erntegutes weiterhin zu verbessern, ist es vorteilhaft, dass im Umlenkbereich der beiden Förderschnecken diese doppelgängig ausgebildet sind und dass die das Erntegut zur Förderschnecke abgebende Förderschnecke am Schneckenende eine oder mehrere sich in etwa radialer Richtung erstreckende Förderschaufeln aufweist.

In weiterer Ausgestaltung der Erfindung ist es vorteilhaft, dass der Förderkanal mit den Stirnwänden zur Aufnahme der Lager ein einteiliges Gehäuse bildet. Hierdurch kann das Gehäuse gleichzeitig auch als Lagerung des zweiten Förderrohres ausgebildet sein, so dass keine zusätzliche Abstützung des Förderrohres notwendig wird. Damit sich im Bereich des Abgabeendes der ersten Förderschnecke ein ausreichender Druck zur Förderung des Erntegutes im Umlenkbereich aufbauen kann, ist es vorteilhaft, dass nur der doppelgängige Teil der abgebenden Förderschnecke von einem zylindrischen Mantel umgeben ist.

Um beispielsweise eine genaue Anpassung des zweiten Förderrohres gegenüber dem ersten Förderrohr zu ermöglichen, ist es vorteilhaft, dass die eine Förderschnecke um die Achse einer anderen Förderschnecke verschwenkbar ist, wobei die Verbindungsstelle zwischen dem Förderrohr und dem Gehäuse als Drehflansch ausgebildet ist, bzw. dass die aufnehmende Förderschnecke gegenüber der abgebenden Förderschnecke verschwenkbar ist.

Gemäss der Erfindung ist es ferner vorteilhaft, dass die Unterkante der aufnehmenden Förderschnecke oberhalb der äusseren Begrenzung der abgebenden Förderschnecke endet und dass die Antriebselemente ein Kegelradgetriebe aufweisen, die in einem geschlossenen Gehäuse angeordnet sind. Um eine einwandfreie Befüllung des Sammelbehälters auf einfache Weise zu erreichen, ist es vorteilhaft, dass die ansteigende Förderschnecke durch den Boden des Sammelbehälters geführt ist und sich bis etwa in die Mitte des Sammelbehälters erstreckt und in etwa unterhalb der Oberkante des Sammelbehälters endet. Hierzu kann auf ein weiteres Verteilerorgan verzichtet werden.

Anhand der Zeichnung wird ein Ausführungsbeispiel einer Fördervorrichtung nach der Erfindung erläutert.

Es zeigt:

Fig. 1 eine Seitenansicht der Fördervorrichtung zum Befüllen eines Sammelbehälters,

Fig. 2 das die beiden Förderrohre miteinander verbindende Gehäuse.

In der Zeichnung ist mit 2 ein Förderrohr bezeichnet, das an eine Fördermulde 4 angeschlossen ist, die über eine in der Zeichnung nicht dargestellte Reinigungsvorrichtung beschickt wird. Innerhalb des Förderrohres 2 lagert eine Förderschnecke 6, die über eine in der Zeichnung ebenfalls nicht dargestellte Antriebsvorrichtung angetrieben wird. Das Förderrohr 2 ist im Bereich des Abgabeendes der Förderschnecke 6 an ein Rohrstück 20 eines Gehäuses 16 angeschlossen, das mit einer vertikal verlaufenden Stirnwand 8 zur Aufnahme eines Wälzlagers 10 versehen ist, in dem eine die Förderschnecke 6 aufnehmende Welle 12 drehbar gelagert ist.

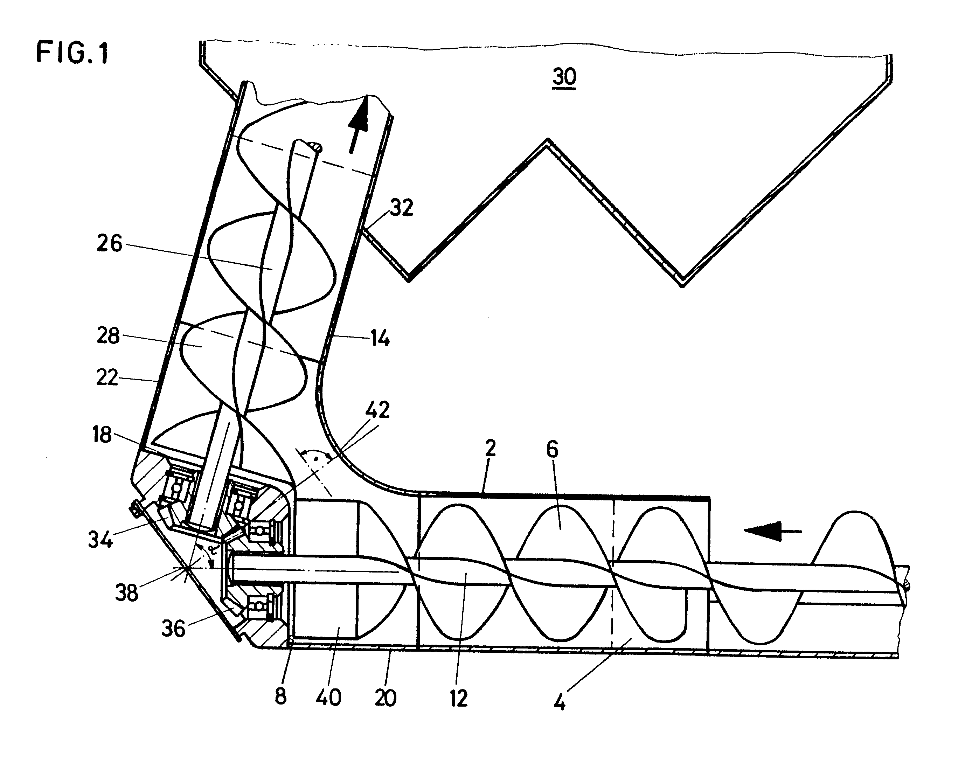

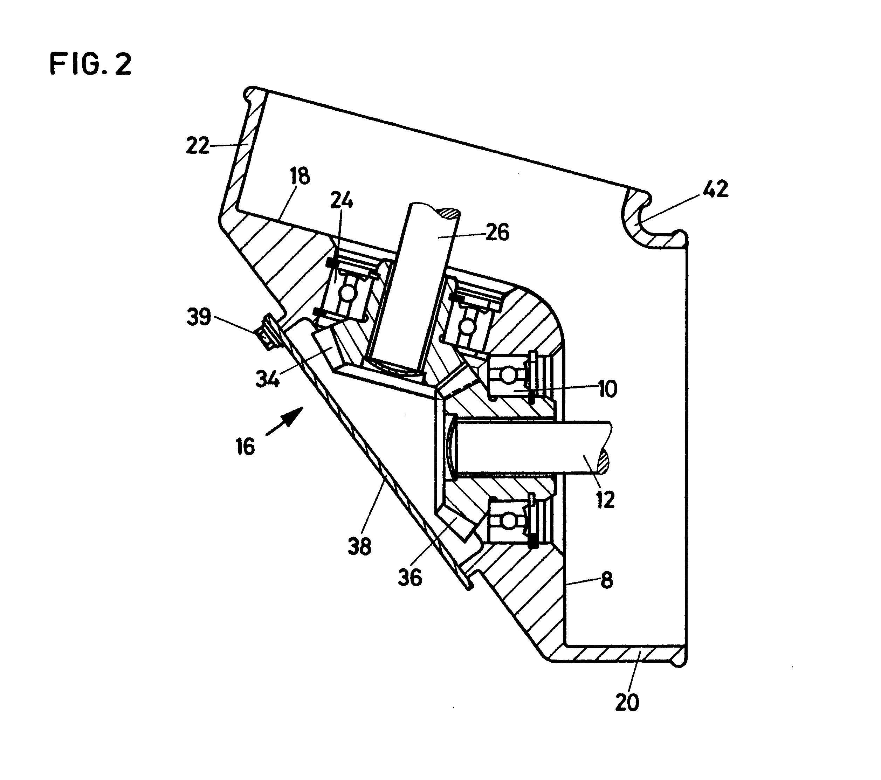

An das die Förderschnecke aufnehmende Rohrstück 20 schliesst sich ein ansteigendes, in Richtung des Förderrohres 2 geneigt verlaufendes Rohrstück 22 an, das zusammen mit dem Rohrstück 20 das Gehäuse 16 bildet und zur Aufnahme eines ebenfalls geneigt verlaufenden Förderrohres 14 dient. Am unteren Ende des Rohrstückes 22 ist ebenfalls eine das Rohrstück teilweise verschliessende Stirnwand 18 vorgesehen, die Bestandteil des Gehäuses 16 ist und mit der Stirnwand 8 einen nach unten offenen, stumpfen Winkel bildet. Im Bereich der Winkelhalbierenden der beiden Mittellinien der Förderschnecken 6 und 28 können die Stirnwände 8 und 18 aneinander stossen und gemäss Fig. 2 derart abgerundet sein, so dass eine ungehinderte Förderung des Erntegutes in diesem Bereich möglich ist. Das Verbindungsteil 42 zwischen dem Rohrstück 20 und 22 kann gemäss Fig. 2 ebenfalls abgerundet sein. Jedoch ist es auch gemäss Fig. 1 möglich, das Verbindungsteil 42 zwischen der innenliegenden Seite des Rohrstückes 20 und des Rohrstückes 22 über ein gerade verlaufendes Rohrstück zu verbinden, so dass dadurch der Durchlassquerschnitt an der engsten Stelle im Gehäuse 16 vergrössert werden kann.

Das mit Bezug auf die Standfläche des Mähdreschers horizontal verlaufende Rohrstück 20 des Gehäuses 16 kann mit dem Förderrohr 2 beispielsweise über einen Drehflansch verbunden sein, der eine Verschwenkung des ansteigenden Förderrohres 14 gegenüber dem Förderrohr 2 gestattet. Auf diese Weise kann das Förderrohr 14 gegenüber dem Förderrohr 2 leichter ausgerichtet werden.

Innerhalb des ansteigenden Förderrohres 14 befindet sich eine Welle 26 für eine Förderschnecke 28, die in einem an der Stirnseite 18 vorgesehenen Wälzlager 24 drehbar aufgenommen ist. Die geometrische Mittellinie der Förderschnecke 6 schneidet sich mit der geometrischen Mittellinie der Förderschnecke 28 in einem spitzen Winkel α ausserhalb des Gehäuses 16. Der Winkel α zwischen den beiden Mittellinien ist kleiner als 90°, um somit auf einfache Weise eine Beschickung eines Sammelbehälters 30 oberhalb der horizontal verlaufenden Förderschnecke 6 zu gewährleisten. Durch die relativ grosse Umlenkung des Erntegutes zwischen den beiden Förderrohren 2 und 14 kann auf ein weiteres Förderorgan zwischen den Abgabe- und Aufnahmeenden der beiden Förderschnecken 6 und 28 verzichtet werden. Da die beiden Förderrohre stirnseitig geschlossen sind, bilden sie zusammen mit den Rohrstücken 20 und 22 einen Durchlasskanal, über den das Erntegut von dem Förderrohr 2 zu dem Förderrohr 14 geleitet wird.

Wie insbesondere aus Fig. 2 hervorgeht, liegen die Wellenenden der Welle 12 und 26 ausserhalb des Gehäuses 16 und weisen miteinander in Eingriff stehende Kegelräder 34 und 36 auf, die mittels einer lösbaren Abdeckplatte 38 nach aussen abgedeckt sind. Die Abdeckplatte 38 ist hierzu über Schraubenbolzen 39 mit dem Gehäuse 16 fest verbunden. Durch die vorteilhafte Anordnung der Kegelräder 34 und 36 wird der Durchlassquerschnitt zwischen dem Rohrstück 20 und 22 vergrössert, so dass das Erntegut ungehindert von dem Förderrohr 2 in das Förderrohr 14 gelangen kann.

Das ansteigende Förderrohr 14 erstreckt sich durch eine Durchlassöffnung 32, die im Boden des Sammelbehälters 30 vorgesehen ist, wobei das obere Ende der Förderschnecke 28 unterhalb der Unterkante des Sammelbehälters 30 endet. Mit Bezug auf die Längsmittelebene des Sammelbehälters 30 kann auch das obere Ende der Förderschnecke 28 vor dieser Längsmittelebene enden, da mit Bezug auf die Fahrtrichtung des Mähdreschers das Erntegut die Tendenz hat, nach hinten zu wandern. Durch diese vorteilhafte Anordnung des Entleerungsrohres 14 kann am Abgabeende der Förderschnecke 28 auf ein zusätzliches Verteilerorgan, beispielsweise ein Horizontalförderer, verzichtet werden.

Im Bereich des Förderrohres 2 ist die Förderschnecke 6 doppelgängig ausgebildet und weist an ihrem Ende eine oder mehrere sich radial erstreckende Schaufeln 40 auf, die das Erntegut dem Aufnahmeende der Förderschnecke 28 zuführen. Die Förderschnecke 28 kann ebenfalls im unteren Ende, beispielsweise für drei Schneckengänge, doppelgängig ausgebildet sein, um somit eine forcierte Förderung des Erntegutes im Umlenkbereich zu gewährleisten. Im Bereich des Abgabeendes der Förderschnecke 6 erstreckt sich das Förderrohr 2 nur über den doppelgängigen Bereich der Förderschnecke 6, damit sich in diesem Bereich ein ausreichend starker Druck aufbauen kann, um eine gute Förderung des Erntegutes durch das Gehäuse 16 zu gewährleisten. Besonders vorteilhaft ist es, dass die beiden Förderrohre 2, 14 sowie die Wellen 12, 26 auf der gleichen vertikalen Ebene liegen, so dass mit einem Minimum an Bauteilen zur Verbindung der beiden Förderrohre 2, 14 ausgekommen werden kann. Ausserdem können die beiden Förderschnecken 6, 28 wesentlich leichter miteinander antriebsverbunden werden.

**Patentansprüche**

1. Fördervorrichtung zum Befüllen des Sammelbehälters (30) eines Mähdreschers mit Erntegut, welches von einem tiefer liegenden Niveau aus nach oben in den Sammelbehälter gefördert wird, mit einem ersten eine Förderschnecke (6) aufweisenden Förderrohr (2) und einem zweiten an das erste Förderrohr (2) über ein geschlossenes Verbindungsgehäuse angeschlossenen, ebenfalls eine Förderschnecke (28) aufweisenden, ansteigenden Förderrohr (14), wobei die beiden Förderschnecken endseitig über Antriebselemente miteinander antriebsverbunden sind und ihre beiden geometrischen Mittelachsen einen Winkel kleiner als 90° einschliessen, dadurch gekennzeichnet, dass die beiden geometrischen Mittelachsen der Förderschnecken (6, 28) auf einer vertikalen Ebene angeordnet sind und dass die beiden Förderrohre (2, 14) über Stirnwände (8, 18) derart geschlossen sind, dass die Stirnwände zur Aufnahme von Wellen (12, 26) der Förderschnecken (6, 28) dienen und mit der übrigen Gehäusewand der Förderrohre einen Förderkanal bilden, wobei die miteinander verbundenen Antriebselemente ausserhalb des Förderkanals liegen.

2. Fördervorrichtung nach Anspruch 1, dadurch gekennzeichnet, dass die beiden Förderrohre (2, 14) derart über den Förderkanal miteinander verbunden sind, dass der Förderkanal oberhalb des Schnittpunktes der Wellen (12, 26) der beiden endseitig verbundenen Förderschnecken (6, 28) bzw. der die Förderrohre (2, 14) verschliessenden Stirnwände (8, 18) und seine Mittelachse in etwa rechtwinklig zur Winkelhalbierenden der sich schneidenden Wellen (12, 26) verläuft.

3. Fördervorrichtung nach Anspruch 1, dadurch gekennzeichnet, dass der Winkel eine Grösse von ca. 75° aufweist.

4. Fördervorrichtung nach einem oder mehreren der vorherigen Ansprüche, dadurch gekennzeichnet, dass die beiden Stirnwände (8, 18) zur Aufnahme der Lager mit ihren Kanten aneinanderstossen, die Förderrohre (2, 14) nach aussen hin abdichten und einen Winkel grösser als 90° einschliessen.

5. Fördervorrichtung nach einem oder mehreren der vorherigen Ansprüche, dadurch gekennzeichnet, dass im Umlenkbereich der beiden Förderschnecken (6, 28) diese doppelgängig ausgebildet sind.

6. Fördervorrichtung nach einem oder mehreren der vorherigen Ansprüche, dadurch gekennzeichnet, dass die das Erntegut zur Förderschnecke (28) abgebende Förderschnecke (6) am Schneckenende eine oder mehrere sich in etwa radialer Richtung erstreckende Förderschaufeln (40) aufweist.

7. Fördervorrichtung nach einem oder mehreren der vorherigen Ansprüche, dadurch gekennzeichnet, dass der Förderkanal (Rohrstücke 20, 22) mit den Stirnwänden (8, 18) zur Aufnahme der Lager ein einteiliges Gehäuse (16) bildet.

8. Fördervorrichtung nach einem oder mehreren der vorherigen Ansprüche, dadurch gekennzeichnet, dass nur der doppelgängige Teil der abgebenden Förderschnecke (6) von einem zylindrischen Mantel umgeben ist.

9. Fördervorrichtung nach einem oder mehreren der vorherigen Ansprüche, dadurch gekennzeichnet, dass die eine Förderschnecke (6 bzw. 28) um die Achse einer anderen Förderschnecke verschwenkbar ist, wobei die Verbindungsstelle zwischen dem Förderrohr (2 bzw. 14) und dem Gehäuse (16) als Drehflansch ausgebildet ist.

10. Fördervorrichtung nach einem oder mehreren der vorherigen Ansprüche, dadurch gekennzeichnet, dass die aufnehmende Förderschnecke (28) gegenüber der abgebenden Förderschnecke (6) verschwenkbar ist.

11. Fördervorrichtung nach einem oder mehreren der vorherigen Ansprüche, dadurch gekennzeichnet, dass die Unterkante der aufnehmenden Förderschnecke (28) oberhalb der äusseren Begrenzung der abgebenden Förderschnecke (6) endet und dass die Antriebselemente ein Kegelradgetriebe (34, 36) aufweisen, die in einem geschlossenen Gehäuse angeordnet sind.

12. Fördervorrichtung nach einem oder mehreren der vorherigen Ansprüche, dadurch gekennzeichnet, dass die ansteigende Förderschnecke (28) durch den Boden des Sammelbehälters (30) geführt ist und sich bis etwa in die Mitte des Sammelbehälters erstreckt und in etwa unterhalb der Oberkante des Sammelbehälters endet.

**Claims**

1. Conveying arrangement for filling the collecting hopper (30) of a combine harvester with harvested material which is conveyed upwardly into the collecting hopper from a lower level, with a first conveying tube (2) having a conveyor screw (6) and a second, ascending, conveying tube (14) connected to the first conveying tube (2) via a closed connecting housing and likewise having a coveyor screw (28), the two conveyor screws being connected to one another at one end for driving purposes by way of driving elements and their two geometrical centre axes enclosing an angle smaller than 90°, characterised in that the two geometrical centre axes of the conveyor screws (6, 28) are arranged in a vertical plane and the two conveying tubes (2, 14) are closed in such manner by means of end walls (8, 18) that the end walls serve to receive shafts (12, 26) of the conveyor screws (6, 28) and form a conveying duct with the rest of the housing wall of the conveying tubes, the interconnected driving elements being located outside the conveying duct.

2. Conveying arrangement according to claim 1, characterised in that the two conveying tubes (2, 14) are connected to one another in such manner by way of the conveying duct that the conveying duct extends above the point of intersection of the shafts (12, 26) of the two conveyor screws (6, 28) connected at one end and of the end walls (8, 18) closing the conveying tubes (2, 14) and its centre axis extends substantially at right angles to the bisector of the angle of the intersecting shafts (12, 26).

3. Conveying arrangement according to claim 1, characterised in that the angle has a size of about 75°.

4. Conveying arrangement according to one or more of the preceding claims, characterised in that the two end walls (8, 18) meet or abut one another at their edges to receive the bearings, seal the conveying tubes (2, 14) in the outward direction and enclose an angle greater than 90°.

5. Conveying arrangement according to one or more of the preceding claims, characterised in that the two conveyor screws (6, 28) are formed with a double lead in their zone of deflection.

6. Conveying arrangement according to one or more of the preceding claims, characterised in that the conveyor screw (6) delivering the harvested material to the conveyor screw (28) has at its end one or more vanes (40) extending in a substantially radial direction.

7. Conveying arrangement according to one or more of the preceding claims, characterised in that the conveying duct (tube sections 20, 22) forms with the end walls (8, 18) a one-part housing (16) for receiving the bearings.

8. Conveying arrangement according to one or more of the preceding claims, characterised in that only the double-lead portion of the delivering conveyor screw (6) is surrounded by a cylindrical jacket.

9. Conveying arrangement according to one or more of the preceding claims, characterised in that one conveyor screw (6 or 28) can be swivelled about the axis of the other conveyor screw, the connection between the conveying tube (2 or 14) and the housing (16) being in the form of a rotary flange.

10. Conveying arrangement according to one or more of the preceding claims, characterised in that the receiving conveyor screw (28) can be swivelled with respect to the delivering conveyor screw (6).

11. Conveying arrangement according to one or more of the preceding claims, characterised in that the bottom edge of the receiving conveyor screw (28) terminates above the outer boundary of the delivering conveyor screw (6) and the driving elements comprise a bevel gearing (34, 36) which is arranged in a closed housing.

12. Conveying arrangement according to one or more of the preceding claims, characterised in that the ascending conveyor screw (28) is passed through the bottom of the collecting hopper (30) and extends into about the centre of the collecting hopper and terminates somewhat below the top edge of the collecting hopper.

**Revendications**

1. Dispositif transporteur pour le remplissage de la trémie formant réceptacle d'une moissonneuse-batteuse avec des produits de récolte qui sont transportés d'un niveau situé plus bas, en direction du haut, jusque dans la trémie, comprenant une première gaine de transport (2) dans laquelle est logée une vis transporteuse (6) et une seconde gaine de transport ascendante (14), raccordée à la première gaine de transport (2) par l'intermédiaire d'un carter de raccordement fermé et comprenant également une vis transporteuse (28), les deux vis transporteuses étant reliées cinématiquement ensemble à leur extrémité par des éléments d'entraînement et leurs deux axes géométriques médians faisant entre eux un angle inférieur à 90°, caractérisé en ce que les deux axes géométriques médians des vis transporteuses (6, 28) sont disposés dans un plan vertical et en ce que les deux gaines de transport (2, 14) sont fermées par des parois terminales (8, 18) de telle sorte que ces parois terminales servent à la réception des arbres (12, 26) des vis transporteuses (6, 28) et forment un canal ou passage de transport avec le reste de la paroi des gaines de transport, les éléments d'entraînement reliés entre eux se trouvant à l'extérieur de ce passage de transport.

2. Dispositif transporteur suivant la revendication 1, caractérisé en ce que les deux gaines de transport (2, 14) sont reliées entre elles par l'intermédiaire du passage de transport de façon telle que ce passage de transport s'étende au-dessus du point d'intersection des arbres (12, 26) des deux vis transporteuses (6, 28) reliées par leur extrémité ou des parois terminales (8, 18) obturant les gaines de transport (2, 14), son axe médian étant sensiblement perpendiculaire à la bissectrice de l'angle formé entre les arbres s'intersectionnant (12, 26).

3. Dispositif transporteur suivant la revendication 1, caractérisé en ce que l'angle a une valeur d'environ 75°.

4. Dispositif transporteur suivant une ou plusieurs des revendications précédentes, caractérisé en ce que les deux parois terminales (8, 18) servant à la réception des paliers sont aboutées par leurs bords, les gaines transporteuses (2, 14) étant obturées de façon étanche vers l'extérieur par ces parois et ces dernières faisant entre elles un angle supérieur à 90°.

5. Dispositif transporteur suivant une ou plusieurs des revendications précédentes, caractérisé en ce que, dans la zone de déviation, les deux vis transporteuses (6, 28) comportent un double filet.

6. Dispositif transporteur suivant une ou plusieurs des revendications précédentes, caractérisé en ce que la vis transporteuse (6) transférant les produits de récolte à l'autre vis transporteuse (28) comporte à son extrémité une ou plusieurs pales de transport (40) s'étendant sensiblement dans la direction radiale.

7. Dispositif transporteur suivant une ou plusieurs des revendications précédentes, caractérisé en ce que le canal ou passage de transport (tronçons tubulaires 20, 22) forme avec les parois terminales (8, 18) servant à la réception des paliers un carter (16) d'un seul tenant.

8. Dispositif transporteur suivant une ou plusieurs des revendications précédentes, caractérisé en ce que seule la partie à double filet de la vis transporteuse de transfert (6) est entourée par une enveloppe cylindrique.

9. Dispositif transporteur suivant une ou plusieurs des revendications précédentes, caractérisé en ce que l'une des vis transporteuses (6 ou 28) peut pivoter autour de l'axe d'une autre vis transporteuse, le point de raccordement entre la gaine de transport (2, 14) et le carter (16) étant réalisé sous la forme d'une bride rotative.

10. Dispositif transporteur suivant une ou plusieurs des revendications précédentes, caractérisé en ce que la vis transporteuse réceptrice (28) peut pivoter par rapport à la vis transporteuse de transfert (6).

11. Dispositif transporteur suivant une ou plusieurs des revendications précédentes, caractérisé en ce que le bord inférieur de la vis transporteuse réceptrice (28) se termine au-dessus de la limite extérieure de la vis transporteuse de transfert (6) et en ce que les éléments d'entraînement comportent un mécanisme de transmission par pignons coniques qui est logé dans un carter fermé.

12. Dispositif transporteur suivant une ou plusieurs des revendications précédentes, caractérisé en ce que la vis transporteuse ascendante (28) est guidée à travers le fond de la trémie (30) et s'étend sensiblement jusqu'au milieu de celle-ci pour se terminer un peu au-dessous du bord supérieur de la trémie.

FIG.1

FIG. 2